# EUROPÄISCHE PATENTANMELDUNG

(11) **EP 1 178 225 A1**
(43) Veröffentlichungstag der Anmeldung: **06.02.2002**
(21) Anmeldenummer: 00116851.7
(22) Anmeldetag: 04.08.2000
(51) Int. Cl.: F16B 12/20

(54) **Verbindungselement zur Herstellung einer Stoss- oder Eckverbindung**

(71) Anmelder: Hoffmann, Thomas, 76646 Bruchsal (DE); Hoffmann, Martin, 76646 Bruchsal (DE)
(72) Erfinder: Hoffmann, Thomas, 76646 Bruchsal (DE); Hoffmann, Martin, 76646 Bruchsal (DE)
(74) Vertreter: Truckenmüller, Frank

(57) **Zusammenfassung**

Die Erfindung betrifft ein Verbindungselement (65) zur Herstellung einer Stoß- oder Eckverbindung von in Kontaktflächen (77, 78) aneinandergefügten Formteilen (38, 39), insbesondere Möbelteilen, Rahmenteilen, Profilteilen oder dergleichen. Das Verbindungselement (65) weist einen ersten Abschnitt und einen zweiten Abschnitt auf. Der erste Abschnitt ist als Keil (40) mit einem sich in Richtung auf den zweiten Abschnitt verjüngenden Querschnitt und in Bezug auf eine Mittelebene symmetrisch gestaltet und weist in einer Ebene normal zu der Mittelebene beiderseits derselben im wesentlichen parallele Außenkonturen auf. Der zweite Abschnitt des Verbindungselements (65) ist als ein vorzugsweise zylinderförmiger Bolzen (41) gestaltet.

## Beschreibung

Die Erfindung betrifft ein Verbindungselement zur Herstellung einer Stoß- oder Eckverbindung von in Kontaktflächen aneinandergefügten Formteilen, insbesondere Möbelteilen, Rahmenteilen, Profilteilen oder dergleichen, das einen ersten Abschnitt und einen zweiten Abschnitt aufweist, wobei der erste Abschnitt als Keil mit einem sich in Richtung auf den zweiten Abschnitt verjüngenden Querschnitt und in Bezug auf eine Mittelebene symmetrisch gestaltet ist und der in einer Ebene normal zu der Mittelebene beiderseits derselben im wesentlichen parallele Außenkonturen aufweist.

Ein derartiges Verbindungselement zur Herstellung einer Stoß- oder Eckverbindung ist aus der EP 0 370 334 B1 der Schutzrechtsinhaberin bekannt. Bei dieser seit vielen Jahren wirtschaftlich sehr erfolgreichen Verbindungslösung ist das als Feder gestaltete Verbindungselement symmetrisch zu einer Mittelebene ausgebildet und besteht im Querschnitt gesehen aus zwei trapezförmigen Teilen, die im Bereich der Mittelachse mit ihren kleineren Grundlinien unter Ausbildung eines schwalbenschwanzförmigen Doppelkeils zusammenstoßen.

Obwohl die mit diesem Verbindungselement gestaltete Stoß- oder Eckverbindung bereits ein vielfältiges Verwendungs- und Leistungsspektrum eröffnet, erscheint diese noch weiter verbesserbar. Nach lagerichtiger Aneinanderfügung der zu verbindenden Rahmenteile müssen die Verbindungselemente in die sich beidseitig der Kontaktflächen erstreckenden Aufnahmenuten von einer Seitenkante der Rahmenteile aus eingepreßt werden. Hierfür bedarf es folglich in jedem der zu verbindenden Rahmenteile einer entsprechenden Aufnahmenut, die von einer Seite des Rahmens aus sichtbar ist. Diese Konstruktion entspricht unter funktionellen und optisch/dekorativen Aspekten bei Bilderrahmen, Fensterrahmen oder dergleichen in der Regel völlig den Benutzerbedürfnissen. Bei bestimmten Verbindungskonstruktionen, beispielsweise einem Möbelkorpus oder einem Regalsystem, müssen die Stoß- oder Eckverbindungen jedoch auch innerhalb der Flächenbereiche von großflächigen Formteilen vorgesehen sein, um dort sich auch über größere Abstände erstreckende Stützteile, Bodenbretter, Deckel oder andere Rahmenteile anbringen zu können. Dabei ist es zur Erzielung einer ausreichenden Stabilität bzw. Tragfähigkeit der zu verbindenden Teile notwendig, in bestimmten Abständen die Stoß- oder Eckverbindungen ermöglichenden Verbindungselemente anzubringen. Bei Verwendung der bisher bekannten Stoß- oder Eckverbindungen gemäß der EP 0 370 334 B1 würde dies jedoch auch sich über größere Längen- und Flächenbereiche erstreckende Aufnahmenuten für die Verbindungselemente erfordern. Dies erscheint jedoch sowohl unter funktionellen als auch unter dekorativen Aspekten nachteilig.

Dementsprechend ist es eine Aufgabe der Erfindung, ein Verbindungselement zur Herstellung einer Stoß- oder Eckverbindung zu schaffen, die erweiterte Verwendungs- und Einsatzmöglichkeiten eröffnet, einfach und leicht herstellbar sowie gegebenenfalls wieder lösbar ist und die zugleich hohen Anforderungen an die Verbindungsqualität genügt sowie den optischen Benutzerbedürfnissen besser entspricht.

Diese Aufgabe ist durch die Merkmale des Anspruches 1, insbesondere dadurch gelöst, daß der zweite Abschnitt des Verbindungselements als ein vorzugsweise zylinderförmiger Bolzen gestaltet ist. Dadurch können die unter optischen und/oder funktionellen Gesichtspunkten störenden Aufnahmenuten bei einem der Formteile entfallen und die zur Aufnahme der Einsteckbolzen dienenden Öffnungen können an nahezu beliebigen, ausgewählten Stellen in den Flächenbereichen dieses Formteils angeordnet werden. Dabei können die Verbindungselemente in einfacher Weise mit ihren Bolzenteilen in die entsprechend angepaßten Öffnungen des zugehörigen Formteils eingesteckt werden und anschließend kann das mit diesem Formteil zu verbindende, mit keilförmigen Aufnahmenuten für die Keile der Verbindungselemente versehene Formteil, beispielsweise ein Boden oder ein Deckel eines Korpus oder ein Regalboden einfach und leicht auf die Keile der Verbindungselemente aufgesteckt werden, so daß eine auch hohen Anforderungen an die Verbindungsfestigkeit und Qualität genügende formschlüssige Stoß- oder Eckverbindung geschaffen werden kann, die auch den optischen Benutzerbedürfnissen besser entspricht.

Zweckmäßigerweise ist der Bolzen mit Oberflächenrauigkeiten versehen. Dadurch kann das Herausziehen des Bolzens aus der diesem zugeordneten Öffnung erschwert werden, so daß eine stabilere Verbindung zwischen dem Verbindungselement und dem die Aufnahmeöffnung für den Bolzen aufweisenden Formteil ermöglicht ist. Die Verbindungsfestigkeit läßt sich ferner weiter verbessern, wenn der Bolzen einen Außenquerschnitt aufweist, der geringfügig größer ist als eine zur Aufnahme des Bolzens geeignete Öffnung. Dabei sind der Innenquerschnitt der vorzugsweise als Bohrung gestalteten Öffnung und der Außenquerschnitt des Bolzens derart aufeinander abgestimmt gestaltet, daß das die Öffnungsränder bildende Material beim Einführen des Bolzens auch elastisch verformt wird, so daß der Bolzen durch die sich ausbildenden elastischen Rückstellkräfte unter Ausbildung einer ausziehfesten Verbindung befestigt ist. Dabei ist es ferner zweckmäßig, wenn die Oberflächenrauigkeiten mit Gewindeflanken eines Schraubgewindes und/oder widerhakenförmig gestaltet sind. Es versteht sich, daß die die Bolzen aufnehmenden Öffnungen ebenfalls mit einem hierzu passenden Gewinde gestaltet sein können, so daß die Verbindungselemente mit ihren Bolzen in die Öffnungen eingeschraubt werden können bzw. wieder herausgedreht werden können. Es versteht sich ferner, daß auch die widerhakenförmig gestalteten Oberflächenrauigkeiten von ihrer Formgebung her optimal an die jeweiligen Materialpaarungsverhältnisse angepaßt gestaltet sein können, beispielsweise auch die Form von Harpunenhaken oder anderen von Befestigungsdübeln oder ähnlichen Verbindungselementen her bekannten Hakenkonstruktionen gestaltet sein können.

Gemäß einer vorteilhaften Weiterbildung kann das Verbindungselement einen an dem bolzenseitigen Ende des Keils angeordneten Anschlag aufweisen, dessen Anschlagfläche den Bolzen zumindest teilweise seitlich überragt. Diese Anschlagfläche stützt sich nach Montage der Stoß- oder Eckverbindung vorzugsweise auf der Kontaktfläche des mit der zur Aufnahme des Bolzens dienenden Öffnung versehenen Formteils ab und weist vorzugsweise eine dem bolzenseitigen Ende des Keils entsprechende Breite auf. Der Anschlag ermöglicht eine definierte Lage des Keils relativ zu der die Aufnahmeöffnung für den Bolzen aufweisenden Formteil zugeordneten Kontaktfläche, so daß eine gleichbleibende Qualität der Stoß- oder Eckverbindung erreichbar ist. Dabei begrenzt die Anschlagfläche des Anschlages die Einstecktiefe des Bolzens.

Es ist ferner von Vorteil, wenn der erste Abschnitt einen im Bereich des Keils angeordneten Anschlag aufweist, dessen Anschlagfläche den Keil und den Bolzen zumindest teilweise seitlich überragt und der vorzugsweise als eine Aufnahmenut für den Keil überdecken könnende Abdeckkappe gestaltet ist. Dies ermöglicht eine definierte Position der Seitenfläche des die Aufnahmenut für den Keil enthaltenden Formteils relativ zu dem mit diesem zu verbindenden anderen Formteil. Ferner kann dadurch das Herausgleiten dieses Formteils unter einer in Längsrichtung der Aufnahmenut wirkenden Kraft verhindert werden. Wenn dieser Anschlag als eine die Aufnahmenut überdeckende Abdeckkappe gestaltet ist, kann außerdem eine den optisch-/dekorativen Bedürfnissen der Benutzer bzw. Anwender in günstiger Weise entsprechende Stoß- und Eckverbindung geschaffen werden.

Ferner kann der Keil an seinem von dem Einsteckende des Bolzens wegweisenden Ende eine vorzugsweise ebene Einschlagfläche aufweisen. Auf diese Weise kann das Verbindungselement mit dem bolzenseitigen Ende voran in die zu dessen Aufnahme geeignete Öffnung unter Verwendung eines Hammers oder dergleichen einfach und schnell eingeschlagen werden.

Es ist ferner zweckmäßig, wenn der Keil an seinem von dem Einsteckende des Bolzens wegweisenden Ende eine nach außen offene und sich in den Keil hineinerstreckende Ausnehmung zur Aufnahme eines an deren Öffnungsrändern abstützbaren Betätigungswerkzeuges zum Herausziehen bzw. Herausdrehen oder Hineindrehen bzw. Hineindrücken des Bolzen aus bzw. in eine Öffnung aufweist. Es versteht sich, daß abgestimmt auf die Anwender- bzw. Benutzerbedürfnisse die Ausnehmung mit einem Flachschlitz, Kreuzschlitz oder Innen-Sechskant gestaltet sein kann und daß das zugehörige Betätigungswerkzeug ein Flachschlitz- bzw. Kreuzschlitzschraubenzieher oder ein Imbusschlüssel sein kann.

Vorteilhafterweise ist der Keil und der Bolzen symmetrisch zu einer gemeinsamen Mittelebene gestaltet. Ein derartiges Verbindungselement läßt sich besonders einfach und kostengünstig herstellen und ermöglicht eine besonders einfache und leichte Montage einer Stoß- oder Eckverbindung.

Gemäß einer weiteren vorteilhaften Weiterbildung, kann der Keil mit einem Teil-Kegel-Stumpf, vorzugsweise einem Teil-Kreis-Kegelstumpf ausgebildet sein. Dies erleichtert das Einstecken des Keils in die zu seiner Aufnahme vorgesehene Nut und ermöglicht im übrigen eine besonders einfache und kostengünstige Herstellung des Verbindungselementes und der Aufnahmenuten für den Keil und folglich der gesamten Stoß- oder Eckverbindung.

Gemäß einer besonders vorteilhaften Weiterbildung der Erfindung betrifft diese eine Stoß- oder Eckverbindung von in Kontaktflächen aneinandergefügten Formteilen, insbesondere Möbelteilen, Rahmenteilen, Profilteilen oder dergleichen, mit wenigstens einem gemäß den vorstehenden Merkmalen gestalteten Verbindungselement, das unter Überbrückung der Kontaktebene zwischen den Formteilen in zu den Kontaktflächen offene und an die Querschnitte der Abschnitte angepaßte erste und zweite Öffnungen eingreift, die sich vorzugsweise rechtwinklig zu den Kontaktflächen der Formteile in das jeweilige Formteil hineinerstrecken, wobei der Keil in die als Aufnahmenut gestaltete erste Öffnung eingreift, die sich längs der Kontaktflächen von einer Seitenfläche einer der Formteile aus in dieses hineinerstreckt, wobei der zweite Abschnitt des Verbindungselements als ein in die zweite Öffnung des zugehörigen Formteils von der Seite der diesem zugeordneten Kontaktfläche aus einsteckbarer Bolzen ausgebildet ist.

Vorstehende Maßnahmen tragen sowohl einzeln als auch in Kombination untereinander zu einem Verbindungselement zur Herstellung einer Stoß- oder Eckverbindung mit erweiterten Verwendungs- und Einsatzmöglichkeiten bei, die einfach und leicht herstellbar sowie gegebenenfalls wieder lösbar ist und die zugleich hohen Anforderungen an die Verbindungsqualität genügt und die auch den optischen Benutzerbedürfnissen vorteilhaft entspricht.

Weitere Merkmale, Gesichtspunkte und Vorteile der Erfindung sind dem nachfolgenden, anhand der Figuren abgehandelten Beschreibungsteil entnehmbar.

Zwei bevorzugte Ausführungsbeispiele der Erfindung sind nachstehend anhand der Figuren beschrieben. Es zeigen:
- Fig. 1: eine schematische perspektivische Ansicht einer Rahmenverbindung mit zwei mittels des Verbindungselements verbundener Rähmenteile, die der besseren Übersicht halber transparent dargestellt sind;
- Fig. 2: eine schematische perspektivische Ansicht einer Korpus-Verbindung mit zwei mittels des Verbindungselements verbundener, über Eck angeordneter Rahmenteile, die der besseren Übersicht halber ebenfalls transparent dargestellt sind;
- Fig. 3: einen vergrößerten Querschnitt durch die KorpusVerbindung gemäß Fig. 2 entlang der Schnittlinie 3 - 3;
- Fig. 4: einen Querschnitt durch die Eckverbindung gemäß Fig. 3, entlang den Schnittlinien 4 - 4;
- Fig. 5: eine Vorderansicht eines ersten Ausführungsbeispiels des mit einem Innen-Sechskant versehenen Verbindungselements;
- Fig. 6: eine Oberansicht des Verbindungselements gemäß Fig. 4;
- Fig. 7: eine Unteransicht des Verbindungselements gemäß Fig. 4;
- Fig. 8: eine Seitenansicht des Verbindungselements gemäß Fig. 4;
- Fig. 9: einen Querschnitt durch das Verbindungselement gemäß Fig. 4 entlang den Schnittlinien 8 - 8;
- Fig. 10: einen der Fig. 8 entsprechenden Querschnitt durch ein zweites Ausführungsbeispiel des mit einem Querschlitz gestalteten Verbindungselements und
- Fig. 11: eine der Fig. 5 entsprechende Oberansicht des Verbindungselements gemäß Fig. 10.

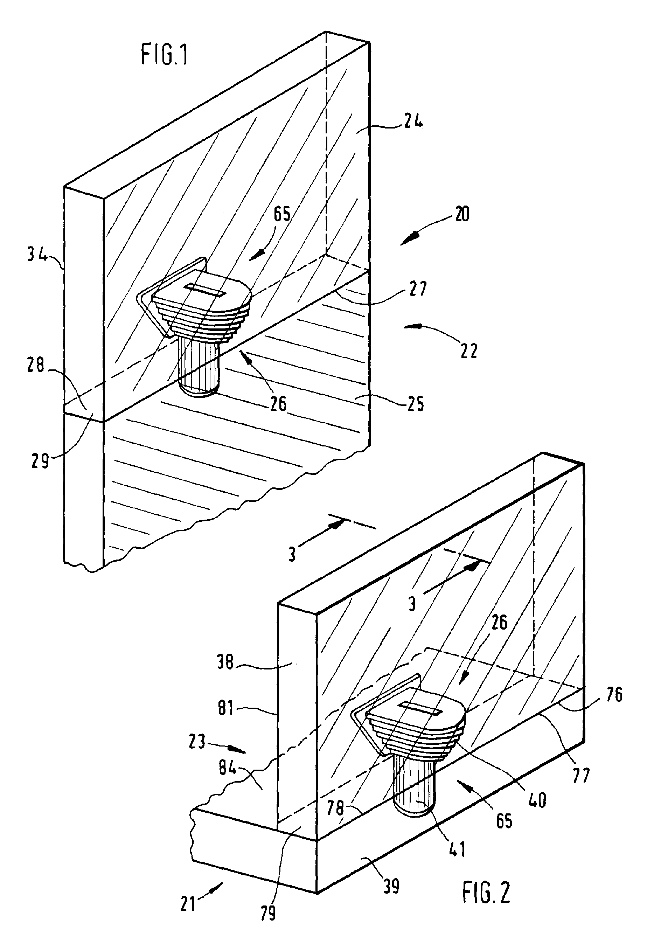

In der in Fig. 1 gezeigten Stoßverbindung 20 sind die jeweils als Quader gestalteten Formteile 24 und 25 unter Ausbildung der Rahmenverbindung 22 an den gegenüberliegenden Kontaktflächen 27 und 28 derart aneinandergefügt, daß die jeweiligen Seitenflächen der Formteile 24 und 25 miteinander fluchten. Dabei sind die Formteile 24 und 25 mittels dem als Feder 26 gestalteten Verbindungselement 65 formschlüssig miteinander verbunden, wobei die Kontaktflächen 27 und 28 sich in der Kontaktebene 29 berühren.
Bei der in Fig. 2 veranschaulichten Eckverbindung 21 sind die ebenfalls jeweils als Quader gestalteten Formteile 38 und 39 an ihren Kontaktflächen 77 und 78 rechtwinklig derart aneinandergefügt, daß die Stirnkante 76, an der die Kontaktebene 79 enthaltenden Seitenfläche 84 des Formteils 39 anliegt. Dabei sind die Formteile 38 und 39 ebenfalls über das als Feder 26 gestaltete Verbindungselement 65 miteinander formschlüssig verbunden.

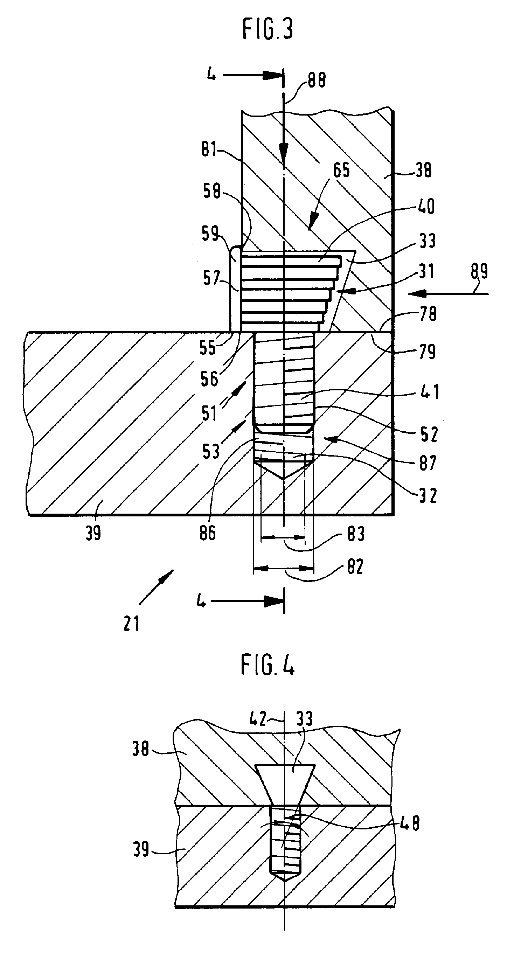

Nachfolgend werden die genauen Eingriffs- und Verbindungsverhältnisse am Beispiel der Eckverbindung 21 anhand der vergrößerten Schnittdarstellungen in den Figuren 3 und 4 erläutert. Die Formteile 38 und 39 sind mit der zu der Kontaktfläche 78 des Formteils 39 offenen ersten Öffnung 31 und mit der zu der Kontaktfläche 79 des Formteils 38 offenen zweiten Öffnung 32 gestaltet. Die erste Öffnung 31 ist dabei als im Querschnitt trapezförmige Aufnahmenut 33 gestaltet, die sich längs der Kontaktfläche 79 von der Seitenfläche 81 aus in das Formteil 38 hineinerstreckt. Demgegenüber erstreckt sich die mit einer Zylinderbohrung gestaltete zweite Öffnung 32 in dem in Fig. 3 gezeigten Ausführungsbeispiel normal zu der Kontaktfläche 78 des Formteils 39 von der Kontaktfläche 78 aus in dieses hinein. Die Öffnung 32 weist den Innendurchmesser 83 auf und ist mit dem die Gewindeflanken 86 aufweisenden Schraubgewinde 87 versehen. Es versteht sich, daß die Öffnung 32 und das Schraubgewinde 87 nicht nur, wie im Ausführungsbeispiel gezeigt, unmittelbar in dem Formteil 39 angeordnet sein kann, sondern daß beispielsweise auch eine Gewindehülse vorgesehen sein kann. Ferner ist es möglich, die Öffnung 32 nur als reine Zylinderbohrung, d.h. ohne Innengewinde zu gestalten und den Gewindebolzen selbstschneidend einzuschrauben.

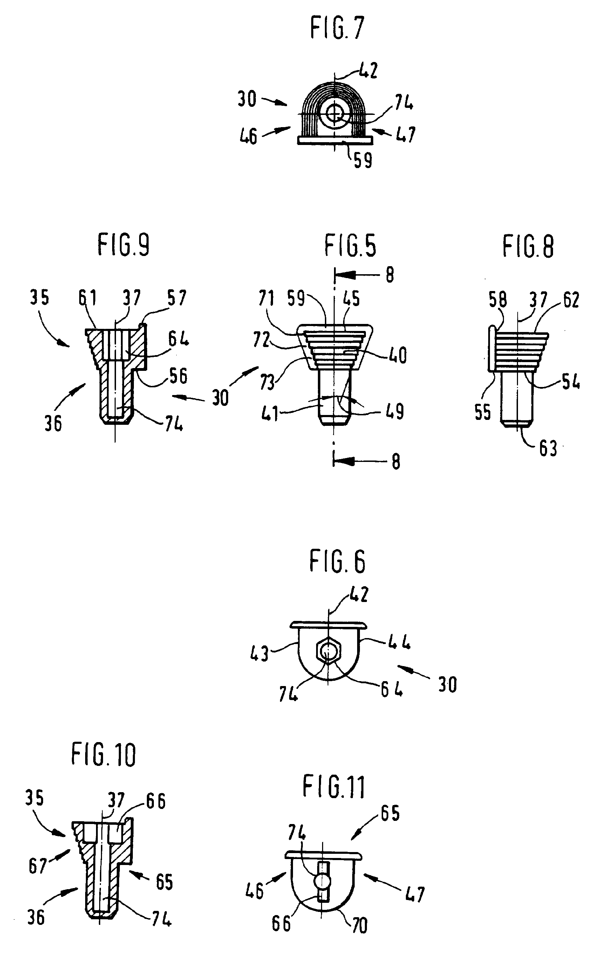

Die Eckverbindung 21 wird vorzugsweise derart hergestellt, daß in einem ersten Schritt der mit dem Schraubgewinde 53 versehene zylindrische Bolzen 41 des Verbindungselements 65 in das hierzu passende Schraubgewinde 87 der Öffnung 32 in Richtung des Pfeils 88 eingeschraubt wird, vorzugsweise bis die Anschlagfläche 58 des Anschlages 57 auf der Kontaktfläche 78 des Formteils 39 aufliegt. Anschließend wird die Kontaktfläche 79 des Formteils 38 bündig auf die Kontaktfläche 78 des Formteils 39 aufgesetzt, wobei die als Aufnahmenut 33 gestaltete erste Öffnung 31 etwa bündig zu dem Keil 40 des Verbindungselementes 65 anzuordnen ist. Anschließend wird das Formteil 38 in Richtung des Pfeils 89 auf den Keil 40 des Verbindungselements 65 aufgeschoben, vorzugsweise bis die Seitenfläche 81 des Formteils 38 an der Anschlagfläche 58 des als Abdeckkappe 59 für die Aufnahmenut 33 gestalteten Anschlages 57 anliegt. Die Aufnahmenut 33 weist den in Fig. 4 dargestellten trapezförmigen Querschnitt auf, der im wesentlichen dem Querschnitt des Keils 40 des Verbindungselements 30 entspricht (Fig. 5). Dabei entspricht der Winkel 48 zwischen den Trapezkanten und der Mittelebene 42 dem Winkel 49 des Keils 40. Allerdings sind die kleine und die große Trapezkante des Öffnungsquerschnittes der Aufnahmenut 33 geringfügig kleiner als die entsprechenden Basislinien des Keils 40 (Fig. 5). Dadurch wird beim Einstecken bzw. Einpressen des Formteils 38 in Richtung des Pfeils 89 in die Aufnahmenut 33 eine formschlüssige Einpressverbindung erreicht, wobei durch die abgetreppte bzw. abgestufte Gestaltung des mit den Keilstufen 71, 72, 73 gestalteten Keils 40 eine innige Verzahnung mit der jeweiligen Trapezfläche der Aufnahmenut 33 erreicht wird. Bedingt durch die formschlüssige Verzahnung des Verbindungselements 65 sowohl im Bereich der Öffnungsränder der ersten Öffnung 31 als auch im Bereich der Öffnungsränder der zweiten Öffnung 32, kann das Verbindungselement 65 als Feder 26 fungieren. Aus dem Vorstehenden ergibt sich, daß im Gegensatz zu der aus dem Stand der Technik bekannten Gestaltung des Verbindungselements mit schwalbenschwanzförmigen, parallele Fügerichtungen induzierenden Doppelkeilen, nunmehr die Fügerichtungen, in der das Verbindungselement in die Öffnungen der beiden zu verbindenden Formteile eingebracht werden kann, nicht übereinstimmen und hier einen Winkel von etwa 90 Grad ausbilden (Pfeile 88, 89).

In dem in Fig. 3 gezeigten Ausführungsbeispiel ist die Tiefe der Aufnahmenut 33 derart auf den Abstand zwischen der Anschlagfläche 58 des Anschlages 57 und den am Einsteckende 63 des Keils 40 befindlichen Keilkanten gestaltet, daß zwischen diesen und den gegenüberliegenden Bereichen der Aufnahmenut 33 ein geringfügiger Spalt ausgebildet ist. Es versteht sich jedoch, daß die Aufnahmenut 33 und der Keil 40 auch derart aufeinander abgestimmt gestaltet sein können, daß auch die Keilkanten im Bereich des Einsteckendes 63 des Keils 40 mit den diesen gegenüberliegenden Öffnungsrändern der Aufnahmenut 33 in Eingriff stehen, so daß im wesentlichen im gesamten Bereich der Öffnungsränder der Aufnahmenut 33 ein formschlüssiger Kontakt zu dem Keil 40 hergestellt sein kann, wodurch sich eine maximale Verbindungsfestigkeit erreichen läßt.

Die genaue Gestaltung des Verbindungselements wird nachfolgend anhand zweier bevorzugter Ausführungsbeispiele beschrieben. Gemäß einem ersten, in den Fig. 5 bis 9 gezeigten Ausführungsbeispiel, ist der Keil 40 an seinem von dem Einsteckende 63 des Bolzens 41 wegweisenden Ende 61 mit einem nach außen offenen und sich in den Keil 40 hineinerstreckenden Innensechskant 64 versehen, so daß das Verbindungselement 65 unter Verwendung beispielsweise eines Inbusschlüssels in die dem Bolzen zugeordnete Öffnung hineingedrückt bzw. hineingeschraubt werden kann bzw. herausgedreht werden kann. Ferner ist das Verbindungselement 30 mit dem als Keil 40 gestalteten ersten Abschnitt 35 und dem als Bolzen 41 gestalteten zweiten Abschnitt 36 ausgebildet. Dabei ist das Verbindungselement 30 symmetrisch zu der Mittelebene 42 gestaltet. Der Keil 40 weist den sich in Richtung auf den Bolzen 41 verjüngenden trapezförmigen Querschnitt auf (Fig. 5). Wie insbesondere aus den Fig. 6 und 7 ersichtlich, ist der Keil 40 an seinem Einsteckende 36 mit dem Teil-Kreis-Kegelstumpf 70 gestaltet, der sich in einem Winkel von 180 Grad um die Mittelachse 37 erstreckt und der durch eine gedachte Ebene begrenzt ist, die normal zur Mittelebene 42 ausgebildet ist und welche die Mittelachse 37 enthält. In den sich an den Teil-Kreis-Kegelstumpf 70 anschließenden Bereichen weist der Keil 40 die beiderseits der Mittelebene verlaufenden Keilkanten 43 und 44 auf, so daß der Keil 40 in einer Ebene bzw. Schnittebene normal zu der Mittelebene 42 beiderseits derselben im wesentlichen parallele Außenkonturen 46, 47 aufweist. An seinem dem Einsteckende 63 gegenüberliegenden Ende weist der Keil 40 den als Abdeckkappe 59 ausgebildeten Anschlag 57 auf. Dessen Anschlagfläche 58 ist normal zur Mittelebene 42 und parallel zur Mittelachse 37 angeordnet. Die äußeren Begrenzungsränder der Anschlagfläche 57 erstrecken sich in geringem, im wesentlichen gleichbleibenden Abstand zu den äußeren Keilrändern in einem parallel zur Mittelachse 37 und normal zur Mittelebene 42 ausgebildeten Querschnitt (vgl. Fig. 5). Dieser Abstand ist derart gewählt, daß die Anschlagflächen 58 die Aufnahmenut 33 im eingesteckten Zustand des Keils 40 überdecken, so daß der Anschlag 57 als Abdeckkappe 59 für die Aufnahmenut 33 fungiert. Der Keil 40 ist im Bereich seiner schrägen Keilränder mit Oberflächenrauigkeiten 67 versehen, die im Ausführungsbeispiel mit einer Mehrzahl von Keilstufen 71, 72, 73 ausgebildet sind. Diese sind hier jeweils durch rechtwinklige Außenkonturen begrenzt und die Breiten der Keilstufen 71, 72, 73 verkleinert sich ausgehend von dem dem Bolzen 41 gegenüberliegenden Ende 61 des Keils 40 diskret von Keilstufe zu Keilstufe. Die auf diese Weise ausgebildeten Eingriffselemente ermöglichen ein leichtes manuelles Einpressen des Keils 40 in die auf dessen Außenkonturen abgestimmt gestaltete Aufnahmenut 33 des einen Formteils 24 bzw. 38 und ermöglicht ferner eine Verformung der Öffnungsränder der Aufnahmenut 33, so daß im eingepreßten Zustand eine innige Verzahnung und formschlüssige Verbindung besteht.

Der Keil 40 geht an seinem bolzenseitigen Ende 54, d.h. querschnittlich betrachtet im Bereich seiner kleinen Trapezbasisfläche, einstückig in den eine zylindrische Außenkontur aufweisenden Bolzen 41 über. Dieser weist im Ausführungsbeispiel einen Außendurchmesser auf, der geringfügig kleiner ist als der Gewindedurchmesser 82 der zweiten Öffnung 32. Der Bolzen 41 ist über seine Länge mit dem Schraubgewinde 53 versehen, dessen Gewindeflanken 52 passend zu den Gewindeflanken 86 des Schraubgewindes 87 der Öffnung 32 gestaltet sind, so daß der Bolzen 41 in die Öffnung 32 einschraubbar ist. Die Gewindeflanken 52 des Schraubgewindes 53 bilden dabei Oberflächenrauigkeiten 51 aus. Es versteht sich, daß der Bolzen auch mit anderen, eine Verzahnung mit den Öffnungsrändern der Öffnung 32 bewirkenden Oberflächenrauigkeiten versehen sein kann. Beispielsweise kann der Bolzen mit längs oder quer zur Längsachse der Bohrungsöffnung verlaufenden Rillen versehen sein, die zweckmäßigerweise widerhakenförmig derart gestaltet sind, daß der Bolzen leicht in die zugehörige Öffnung eingesteckt bzw. eingepreßt werden kann, jedoch sein Herausziehen bedingt durch die widerhakenförmige Gestaltung verhindert wird. Hierzu können im Querschnitt dreieck- bzw. trapezförmige Oberflächenrauigkeiten zweckmäßig sein, die jeweils eine in Richtung des Einsteckendes 63 des Bolzens nach innen verlaufende Schrägflanke aufweisen und die unter Ausbildung einer Spitze bzw. Kante jeweils treppenstufenartig bzw. gewindeartig gestaltet sind.

An dem bolzenseitigen Ende 54 des Keils 40 weist dieser den Anschlag 55 auf, dessen Anschlagfläche 56 die Außenkontur des Bolzens 41 seitlich überragt und die normal auf die Mittelachse 37 sowie normal auf die Mittelebene 42 steht. Auf diese Weise ist einerseits die Einstecktiefe des Bolzens 41 definiert begrenzt und andererseits ergibt sich in Verbindung mit der in diesem Bereich ebenen Kontaktfläche 78 bzw. 28, des der zur Aufnahme des Bolzens 41 bestimmten Öffnung 32 zugeordneten Formteils 39 bzw. 25 eine definierte Lage des Keils 40 relativ zu der Kontaktfläche 78 bzw. 28, so daß dadurch eine vorteilhafte, gleichbleibende Verbindungsqualität erzielbar ist.

Der Keil 40 ist an seinem, dem Bolzen 41 gegenüberliegenden Ende 61 mit einer planen Fläche versehen, die normal zu der Mittelebene 42 bzw. der Mittelachse 37 angeordnet ist. Diese Fläche kann als eine Einschlagfläche 62, zum Einschlagen des Bolzens 41 in eine diesen aufnehmende Öffnung 32 dienen. Ausgehend von der Fläche 62 erstreckt sich parallel zu der Mittelachse 37 eine nach außen offene Ausnehmung zur Aufnahme eines an deren Öffnungsrändern abstützbaren Betätigungswerkzeuges zum Herausziehen bzw. Herausdrehen oder Hineindrehen bzw. Hineindrücken des Bolzens aus bzw. in eine diesem zugeordnete Öffnung. In dem in den Fig. 5 bis 9 gezeigten Ausführungsbeispiel des Verbindungselements 30 ist diese Ausnehmung mit dem Innen-Sechskant 64 ausgebildet, der sich über eine bestimmte Tiefe in den Keil 40 hineinerstreckt. Die dem Innen-Sechskant 64 zugeordnete Ausnehmung geht an dem bolzenseitigen Ende des Innen-Sechskants in die kreiszylindrische Bohrung 74 über, die sich über nahezu die gesamte Länge des Verbindungselements 65 in den Bolzen 41 erstreckt. Dadurch sind günstige Herstellungsmöglichkeiten für das vorzugsweise einstückig ausgebildete Verbindungselement 30, beispielsweise im Spritzgießverfahren gegeben, wobei das Verbindungselement 30 vorzugsweise aus einem thermoplastischen Kunststoffmaterial besteht. Es versteht sich, daß das Verbindungselement 30 auch aus aus Metall oder aus Holz oder anderen geeigneten Materialien bestehen kann, die hinsichtlich der werkstofflich funktionellen Anforderungen an die Verbindungsqualität und/oder an die optisch-/dekorativen Anforderungen der Anwender bzw. Benutzer angepaßt gestaltet sein können und hierzu auch mit Oberflächenbeschichtungen bzw. Überzügen versehen sein können.

Gemäß einem zweiten bevorzugten Ausführungsbeispiel des Verbindungselements 65 ist der Keil 40 an seinem von dem Einsteckende 63 des Bolzens 41 wegweisenden Ende 61 mit einem nach außen offenen und sich in den Keil 40 hineinerstreckenden Schlitz 66 versehen, so daß das Verbindungselement 30 unter Verwendung eines Flachschlitzschraubenziehers in die dem Bolzen zugeordnete Öffnung hineingedrückt bzw. hineingeschraubt werden kann bzw. herausgedreht werden kann. Im übrigen ist das Verbindungselement 65 identisch gestaltet wie das Verbindungselement 30.

### BEZUGSZEICHENLISTE

- 20: Stoßverbindung
- 21: Eckverbindung
- 22: Rahmenverbindung
- 23: Korpusverbindung
- 24: Formteil
- 25: Formteil
- 26: Feder
- 27: Kontaktfläche von 24
- 28: Kontaktfläche von 25
- 29: Kontaktebene
- 30: Verbindungselement
- 31: Erste Öffnung
- 32: Zweite Öffnung
- 33: Aufnahmenut
- 34: Seitenfläche
- 35: erster Abschnitt
- 36: zweiter Abschnitt
- 37: Mittelachse
- 38: Formteil
- 39: Formteil
- 40: Keil
- 41: Bolzen
- 42: Mittelebene von 30
- 43: Keilkante
- 44: Keilkante
- 45: Keilkante
- 46: Außenkontur
- 47: Außenkontur
- 48: Winkel
- 49: Winkel
- 51: Oberflächenrauigkeit von 41
- 52: Gewindeflanke
- 53: Schraubgewinde
- 54: Bolzenseitiges Ende von 40
- 55: Anschlag
- 56: Anschlagfläche
- 57: Anschlag
- 58: Anschlagfläche
- 59: Abdeckkappe
- 61: Ende von 40
- 62: Einschlagfläche
- 63: Einsteckende von 40
- 64: Innen-Sechskant
- 65: Verbindungselement
- 66: Schlitz
- 67: Oberflächenrauigkeit von 40
- 70: Teil-Kreis-Kegelstumpf
- 71: Keilstufe
- 72: Keilstufe
- 73: Keilstufe
- 74: Bohrung
- 76: Stirnkante von 38
- 77: Kontaktfläche von 38
- 78: Kontaktfläche von 39
- 79: Kontaktebene
- 81: Seitenfläche von 38
- 82: Außendurchmesser von 41
- 83: Innendurchmesser von 32
- 84: Seitenfläche von 39
- 86: Gewindeflanke
- 87: Schraubgewinde
- 88: Pfeil
- 89: Pfeil

## Patentansprüche

1. Verbindungselement zur Herstellung einer Stoß- oder Eckverbindung von in Kontaktflächen aneinandergefügten Formteilen, insbesondere Möbelteilen, Rahmenteilen, Profilteilen oder dergleichen, das einen ersten Abschnitt und einen zweiten Abschnitt aufweist, wobei der erste Abschnitt als Keil mit einem sich in Richtung auf den zweiten Abschnitt verjüngenden Querschnitt und in Bezug auf eine Mittelebene symmetrisch gestaltet ist und der in einer Ebene normal zu der Mittelebene beiderseits derselben im wesentlichen parallele Außenkonturen aufweist,
**dadurch gekennzeichnet, daß**
der zweite Abschnitt (35) des Verbindungselements (30, 65) als ein vorzugsweise zylinderförmiger Bolzen (41) gestaltet ist.

2. Verbindungselement nach Anspruch 1, **dadurch gekennzeichnet, daß** der Bolzen (41) mit Oberflächenrauigkeiten (51) versehen ist und vorzugsweise einen Außenquerschnitt aufweist, der geringfügig größer ist als eine zur Aufnahme des Bolzens geeignete Öffnung (32).

3. Verbindungselement nach Anspruch 2, **dadurch gekennzeichnet, daß** die Oberflächenrauigkeiten (51) mit Gewindeflanken (52) eines Schraubgewindes (53) gestaltet sind.

4. Verbindungselement nach Anspruch 2 oder 3, **dadurch gekennzeichnet, daß** die Oberflächenrauigkeiten widerhakenförmig gestaltet sind.

5. Verbindungselement nach einem der Ansprüche 1 bis 4, **dadurch gekennzeichnet, daß** das Verbindungselement (30, 65) einen an dem bolzenseitigen Ende (54) des Keils (40) angeordneten Anschlag (55) aufweist, dessen Anschlagfläche (56) den Bolzen (41) zumindest teilweise seitlich überragt.

6. Verbindungselement nach einem der Ansprüche 1 bis 5, **dadurch gekennzeichnet, daß** der erste Abschnitt (35) einen im Bereich des Keils (40) angeordneten Anschlag (57) aufweist, dessen Anschlagfläche (58) den Keil (40) und den Bolzen (41) zumindest teilweise seitlich überragt und der vorzugsweise als eine eine Aufnahmenut (33) für den Keil (40) überdecken könnende Abdeckkappe (59) gestaltet ist.

7. Verbindungselement nach einem der Ansprüche 1 bis 6, **dadurch gekennzeichnet, daß** der Keil (40) an seinem von dem Einsteckende (63) des Bolzens (41) wegweisenden Ende (61) eine vorzugsweise ebene Einschlagfläche (62) aufweist.

8. Verbindungselement nach einem der Ansprüche 1 bis 7, **dadurch gekennzeichnet, daß** der Keil (40) an seinem von dem Einsteckende (63) des Bolzens (41) wegweisenden Ende (61) eine nach außen offene und sich in den Keil (40) hineinerstreckende Ausnehmung zur Aufnahme eines an deren Öffnungsrändern abstützbaren Betätigungswerkzeuges zum Herausziehen bzw. Herausdrehen oder Hineindrehen bzw. Hineindrücken des Bolzens aus bzw. in eine Öffnung aufweist.

9. Verbindungselement nach einem der Ansprüche 1 bis 8, **dadurch gekennzeichnet, daß** der Keil (40) und der Bolzen (41) symmetrisch zu einer gemeinsamen Mittelebene (42) gestaltet sind.

10. Verbindungselement nach einem der Ansprüche 1 bis 9, **dadurch gekennzeichnet, daß** der Keil (40) mit einem Teil-Kegelstumpf, vorzugsweise einem Teil-Kreis-Kegelstumpf (70) ausgebildet ist.

11. Stoß- oder Eckverbindung von in Kontaktflächen aneinandergefügten Formteilen, insbesondere Möbelteilen, Rahmenteilen, Profilteilen oder dergleichen, mit wenigstens einem Verbindungselement (30, 65) nach einem der Ansprüche 1 bis 10, das unter Überbrückung der Kontaktebene (29, 79) zwischen den Formteilen (24, 25; 38, 39) in zu den Kontaktflächen (27, 28; 77, 78) offene und an die Querschnitte der Abschnitte (35, 36) angepaßte erste und zweite Öffnungen (31, 32) eingreift, die sich vorzugsweise rechtwinklig zu den Kontaktflächen (27, 28; 77, 78) der Formteile (24, 25; 38,39) in das jeweilige Formteil (24, 25; 38, 39) hineinerstrekken, wobei der Keil (40) in die als Aufnahmenut (33) gestaltete erste Öffnung (31) eingreift, die sich längs der Kontaktflächen (27, 77) von einer Seitenfläche (34, 81) einer der Formteile (24, 38) aus in dieses hineinerstreckt,
**dadurch gekennzeichnet, daß**
der zweite Abschnitt (36) des Verbindungselements (30, 65) als ein in die zweite Öffnung (32) des zugehörigen Formteils (25, 39) von der Seite der diesem zugeordneten Kontaktfläche (28, 78) aus einbringbarer Bolzen (41) ausgebildet ist.
